# EUROPEAN PATENT SPECIFICATION

(11) **EP 3 740 709 B1**
(45) Date of publication and mention of the grant of the patent: **07.06.2023**
(21) Application number: 19702124.9
(22) Date of filing: 17.01.2019
(51) Int. Cl.: F16L 9/127, F16L 25/10, F16L 47/06, F24F 13/02

(54) **TUBE ELEMENT MADE OF EXPANDED POLYMER**
ROHRELEMENT AUS EXPANDIERTEM POLYMER
ÉLÉMENT TUBULAIRE EN POLYMÈRE EXPANSÉ

(30) Priority: 17.01.2018 NL 2020285
(43) Date of publication of application: 25.11.2020
(73) Proprietor: Zehnder Group International AG, 5722 Gränichen (CH); Synprodo B.V., 6603 BM Wijchen (NL)
(72) Inventor: WESCHLE, Hans-Peter, 77743 Neuried (DE); SEITER, Udo, 79346 Endingen (DE); BÄDER, Stefanie, 77933 Lahr (DE); CAZEMIER, Marcel Abel, 3453 RZ De Meern (NL)
(74) Representative: Rentsch Partner AG
(86) International application number: PCT/IB2019/050392
(87) International publication number: WO 2019/142129

(56) References cited:
- DE-U1-202008 013 945
- FR-A- 1 558 446
- US-A- 3 095 337
- US-B1- 6 763 853

## Description

According to a first aspect, the present invention relates to a tube element according to claim 1. The tube element is made of expanded polymer, preferably expanded polypropylene, for realizing a tube by coupling at least two of said tube elements.

Tubes made of expanded polymer, as disclosed for example in US3095337A, are amongst other applications used in ventilation systems. An example of a ventilation system comprising tubes of expanded polymer, also referred to as expanded foam, is disclosed in NL1016525C2. Such a ventilation system is for instance used in buildings, such as houses, having a relative good insulation. Given the relative good insulation there is a need to ventilate the building by supplying air from outside the building into the interior of the building and removing air from the interior of the building into the surrounding air, wherein said air is transported via said tubes made of expanded polymer.

The tube element according to the present is arranged for realizing a tube by coupling at least two of said tube elements, wherein said tube, along the length of said tube, has a constant nominal outer diameter and a constant nominal inner diameter.

The tube element according to the present invention comprises:
- a central tube part comprising a central tube part inner wall extending along the length of said central tube part at said nominal inner diameter and a central tube part outer wall;
- a first connection arrangement provided at a first end of said central tube part, wherein said first connection arrangement comprises a first connection arrangement inner wall extending along the length of said first connection arrangement at said nominal inner diameter and a first connection arrangement outer wall extending along the length of said first connection arrangement at a first connection arrangement nominal outer wall diameter;
- a second connection arrangement provided at a second end of said central tube part, wherein said second connection arrangement comprises a second connection arrangement inner wall extending along the length of said second
   connection arrangement at a second connection arrangement nominal inner wall diameter and a second connection arrangement outer wall extending along the length of said second connection arrangement at said nominal outer diameter;
   wherein said first connection arrangement outer wall diameter is larger than said second connection arrangement inner wall diameter for realizing a frictional coupling of said at least two tube elements;
   wherein a difference between said nominal outer diameter and said nominal inner diameter is in the range of 20 to 40 mm.

An advantage of the tube element according to the present invention is that along the length of the tube a relative constant insulation is realised due to the constant nominal outer diameter and a constant nominal inner diameter.

A further advantage of the tube element according to the present invention is that a tube is realised having a constant nominal outer diameter. A constant outer diameter is beneficial for using uniform fastening devices for fastening said tube at different positions along the length of the tube. Moreover, a constant nominal outer diameter is advantageous for allowing said tube to be positioned inside construction elements such as walls by sliding the tube inside said wall.

A yet further advantage of the tube element according to the present invention is a relative small difference between said nominal outer diameter and said nominal inner diameter thereby allowing for a relative large nominal inner diameter of the tube while maintaining a relative small nominal outer diameter. This is beneficial for installing a tube in relative confined spaces.

A further advantage of the tube element according to the present invention is that said tube elements, in use, are coupled by friction coupling. In this way a tube is realized in a very practical manner without the need for further coupling devices. Preferably said first connection arrangement outer wall diameter is larger than said second connection arrangement inner wall diameter for coupling said at least two tube elements solely by frictional coupling.

It is beneficial if said difference between said nominal outer diameter and said nominal inner diameter is in the range of 25 to 35 mm, preferably in the range of 28 to 32 mm. This is beneficial for realizing a relative strong tube element.

It is advantageous if said nominal inner diameter is in the range of 125 mm to 200 mm, preferably 160 mm.

It is advantageous if said nominal outer diameter is in the range of 155 mm to 230 man, preferably 190 mm.

According to the invention, one of said first connection arrangement and said second connection arrangement is provided with a protrusion extending in a radial direction from said first connection arrangement outer wall or said second connection arrangement inner wall, wherein said protrusion is arranged for cooperation with said first connection arrangement outer wall or said second connection arrangement inner wall of the other of said first connection arrangement and said second connection arrangement for realizing a further frictional coupling of said at least two tube elements. This is beneficial for realising a relative large retention force that needs to be overcome for decoupling said tube elements after coupling of said tube elements. This is beneficial for realizing a relative durable and reliable tube. In an embodiment of said tube element said first connection arrangement outer wall at an end, opposite of said central tube part, of said first connection arrangement is provided with a first coupling arrangement having a first coupling diameter that is smaller than said first connection arrangement nominal outer wall diameter for centring said at least two tube elements when coupling said at least two tube elements. This is beneficial for allowing a centring of said at least two tube elements before coupling of said at least two tube elements. Moreover, by providing said first coupling arrangement initial coupling of said at least two tube elements is realised with a relative low force.

In an embodiment of said tube element said second connection arrangement inner wall at an end, opposite of said central tube part of said second
connection arrangement is provided with a second coupling arrangement having a second coupling diameter that is larger than said second connection arrangement nominal inner wall diameter for centring said at least two tube elements when coupling said at least two tube elements. This is beneficial for allowing a centring of said at least two tube elements before coupling of said at least two tube elements. Moreover, by providing said second coupling arrangement initial coupling of said at least two tube elements is realised with a relative low force.

In an embodiment of said tube element said central tube part outer wall extends along the length of said central tube part at said nominal outer diameter.

It is beneficial if said length of said first connection arrangement is larger than said length of said second connection arrangement. This is beneficial for reducing the chance of a discontinuity along the length of the inner wall of a tube realised by coupling said at least two tube elements. A discontinuity along the length of the inner wall at a coupling location of two tube elements results in a less smooth inner surface of said tube thereby increasing possible turbulence of a fluid such as air passing through said tube.

In an embodiment of said tube element said length of said central tube part is equal to the difference between said first connection arrangement outer wall diameter and said second connection arrangement inner wall diameter. In this way a tube element having a relative small overall length is realized. This is beneficial for realising a relative large flexibility as regards the length of a tube to be realised by coupling tube elements according to the present disclosure. In an embodiment of said tube element said length of said central tube part is equal to 0.5 times the difference between said first connection arrangement outer wall diameter and said second connection arrangement inner wall diameter.

It is advantageous if a difference between said nominal inner diameter and said first connection arrangement nominal outer wall diameter is in the range of 14 to 16 mm, preferably 15 mm. This is beneficial for realizing a relative robust first connection arrangement while allowing said friction coupling in a reliable manner.

It is beneficial if a difference between said nominal outer diameter and said second connection arrangement inner wall diameter is in the range of 14 to 16 mm, preferably 15 mm. This is beneficial for realizing a relative robust second connection arrangement while allowing said friction coupling in a reliable manner.

In an embodiment, the polymer foam is a polyolefin foam, preferably a polyethylene foam (expanded polyethylene or EPE) or polypropylene foam (expanded polypropylene or EPP) or polystyrene foam (expanded polystyrene or EPS) or polylactic acid foam (expanded polylactid acid or EPLA) a mixture thereof. The polymer of the foam may be a homopolymer, e.g. a homo-polypropylene or a homo-polyethylene, or it may be a co-polymer, e.g. a copolymer of ethylene and propylene. Mixtures of homopolymers and/or co-polymers may also be envisaged. With mixture of polymer is meant either a physical mixture of two or more polymers, a hybrid mixture wherein a first polymer is impregnated with monomers that, after polymerisation lead to a second polymer, co-polymers or so-called inter-polymers that are a certain type of co-polymers in which the co-monomers are mixed to such an extent that the chemical composition is substantially homogeneous.

In an embodiment, the polymer material used for the polymer foam may be so-called virgin (new) materials or may be recycled materials. Mixture of virgin and recycled materials may also be used. Any combination of type of polymer, density of polymer and origin (virgin versus recycled) may be used.

The tube element may be prepared from a polymer foam, preferably from expandable polymer beads that are expansion molded to provide the support layer. Polymer beads are first impregnated with a blowing agent, for example a physical blowing agent such as a hydrocarbon, e.g. pentane, isopentane, cyclopentane or liquid CO2. A blowing agent produces a cellular structure via a foaming process that reduces the density of the polymer bead and produces an expanded polymer bead. In a preferred process polymer beads are impregnated with a blowing agent and pre-expanded to a certain density that is lower than the density of the polymer bead but higher than the desired density in the tube element. The method of expansion molding using a closed mold under pressure is known in the art and will not be further explained here; usually steam is used to expand the polymeric beads which are optionally provided with an adhesive coating. In an embodiment, the pre-expanded/expandable beads used to prepare the tube element according to the present invention comprises between 4 and 12 wt.% blowing agent, such as isopentane.

With "made of " or "consists of" in the present application is meant "consists for at least 90 wt.%, more preferably at least 95 wt.% of said expanded polymer. Other constituents may be for example fillers, colorant, stabilizers and other additives known to a person skilled in the art. The polymeric foam is preferably a so-called closed cell foam.

Preferably expanded polypropylene, expanded polyethylene, expanded polystyrene or mixtures thereof, more preferably expanded polypropylene or mixtures comprising expanded polypropylene, more preferably mixture comprising at least 50 wt.% of polypropylene based on the total weight of the mixture, such as at least 60 wt.%, at least 70 wt.%, at least 80 wt.% or at least 90 wt.%. In the present invention expanded polymer and polymer foam are used to describe the same.

In an embodiment, the inner wall or outer wall of the tube element may be provided with a coating or membrane-type material to extra smoothen the surface i.e. to increase resistance to pollution.

In an embodiment, the wall thickness of the central tube part is between 10 and 20 mm. In an embodiment, the wall thickness at the connection parts is between 7 and 8 mm.

The bulk density of the tube element (i.e. the density obtained by dividing the mass of the tube element by the volume of the tube element in the tube element is preferably between 20 and 60 kg/m³ (or gram/liter), more preferably between 30 and 40 or between 40 and 60 kg/m³ (or gram/liter) to ensure optimal balance between reduced weight of the tube, isolation properties and self-supporting properties. In an embodiment, a mixture of the same type of polymer may be used having a different density, for example a first EPP having a first density and a second EPP having a second density or a density gradient. In an embodiment, the central tube part of the tube element has a different bulk density, preferably a lower bulk density, than the first and/or second connection parts.

In an embodiment, the density of the polymer foam in said tube element is between 25 and 30 gram/liter and the density of the polymer foam in said first connection arrangement and/or of said second connection arrangement has a density of between 30 and 35 gram/liter.

In an embodiment, the thermal conductivity λ in W/mK measuread according to NEN:EN12667(2001) is less than 0.040, preferably less than 0.039, more preferably less than 0.038. The thermal conductivity of EPP is in the range of 0.037 to 0.040 W/mK. In an embodiment, a polymer foam having active carbon filler is used. WO2012028953 discloses polyolefin foams having Powdered Activated Carbon (PAC). Het vo. As commercial example may be mentioned Eperan PP VT26 (Kaneka) having a particle size of 3.7 mm (+/- 0.7 mm), a bulk density of 28.5 gram per liter (+/-2.5 gram/ liter). In an embodiment, the polymer foam comprises between 2 and 8 wt.% based on the weight of the polymer foam, preferably between 3 and 5 wt.%. carbon filled EPP has the thermal conductivity λ in W/mK measured according to NEN:EN12667(2001) is less 0.034 (preferably between 0.003 and 0.034) W/mK.

It is beneficial if said expanded polymer, preferably said expanded polypropylene, of said first connection arrangement and/or of said second connection arrangement has an average particle diameter of between 2 mm and 4 mm with more than 90 % of the particles, preferably more than 95 % of the particles, being in that range. In an embodiment, the average particle diameter meter of the central tube part is between 1 and 5 mm, preferably between 2 and 4 mm, with more than 90 % of the particles, preferably more than 95 % of the particles, being in that range. The effect of having smaller sized particles in the connection arrangement has the effect of having a stronger connection arrangement, with less chance of breakage due to the small wall thickness in that range, of between 7 and 8 mm.

It is preferable that across the wall in radial direction in the first connection arrangement and/or in the second connection arrangement there are at least 2 to 4 (layers of) polymer particles or foam beads. In other words, in an embodiment, the wall of the tube element is made up of at least two, preferably at least three layers of polymer beads to ensure sufficient strength. In other words, in an embodiment the difference between said nominal inner diameter and said first connection arrangement nominal outer wall diameter is at least three times the said average particle diameter.

It is preferable that across the wall in radial direction in the first connection arrangement and/or the second connection arrangement there are 2 to 10 (layers of) polymer particles or foam beads, preferably 2 to 7 (layers of) polymer particles or foam beads, more preferably 3 to 5 (layers of) polymer particles or foam beads. In other words, in an embodiment, the wall of the tube element is made up of two, preferably three layers of polymer beads to ensure sufficient strength. In other words, in an embodiment the difference between said nominal inner diameter and said first connection arrangement nominal outer wall diameter is three times the said average particle diameter.

In an embodiment of the tube element according to the first aspect of the present invention a difference between said nominal inner diameter and said first connection arrangement nominal outer wall diameter is in a range between 4 - 20 times larger than said average particle diameter to ensure sufficient strength of said first connection arrangement.

In an embodiment of the tube element according to the first aspect of the present invention a difference between said nominal outer diameter and said second connection arrangement inner wall diameter is 4 - 20 times larger than said average particle diameter to ensure sufficient strength of said second connection arrangement.

In an embodiment of the tube element according to the first aspect of the present invention a difference between said nominal inner diameter and said first connection arrangement nominal outer wall diameter is at least three times larger than said average particle diameter and a difference between said nominal outer diameter and said second connection arrangement inner wall diameter is at least three times larger than said average particle diameter to ensure sufficient strength of said tube by coupling at least two of said tube elements.

In a practical embodiment of a tube element according to the first aspect of the present invention said central tube part is provided with indicators extending in a tangential direction along said central tube part outer wall, wherein said indicators are equally spaced in an axial direction of said tube element, and wherein said indicators are arranged for indicating cutting positions along the length of said central tube part for shortening said tube element by cutting.

According to a second aspect, the present invention relates to a tube obtained by coupling at least two tube elements according to the first aspect of the present invention,

The advantageous of the tube are analogue to the advantages of the tube element according to the first aspect of the present invention,

In this regard it is beneficial if the sum of a difference between said nominal inner diameter and said first connection arrangement nominal outer wall diameter of a first tube element of said at least two tube elements and of a difference between said nominal outer diameter and said second connection arrangement inner wall diameter of a second tube element of said at least two tube elements corresponds to 0.99 - 1.01 times a difference, preferably is equal to a difference, of said nominal inner diameter of said tube and said nominal outer diameter of said tube, wherein said first connection arrangement of said first tube element is coupled to said second connection arrangement of said second tube element.

The present invention will now be explained by means of a description of preferred embodiments of a tube element, in which reference is made to the following schematic figures, in which:

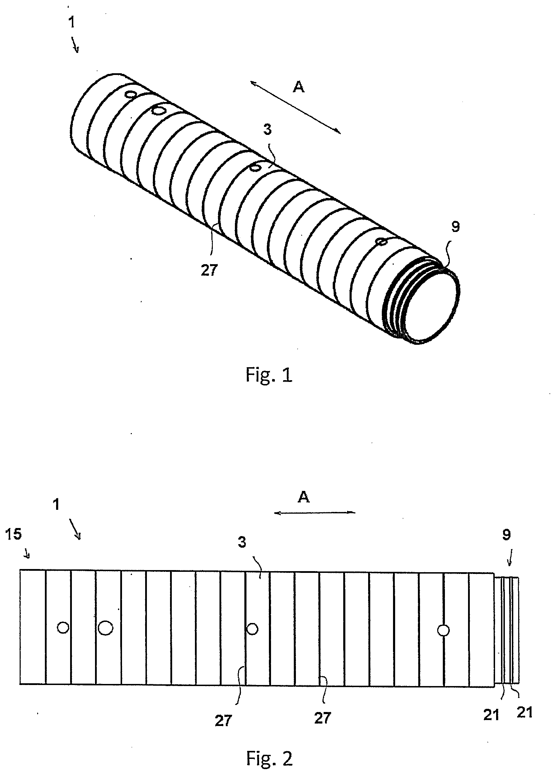

Fig. 1: a tube element according to the present invention is shown;
Fig. 2: the tube element of Fig. 1 is shown in side view;

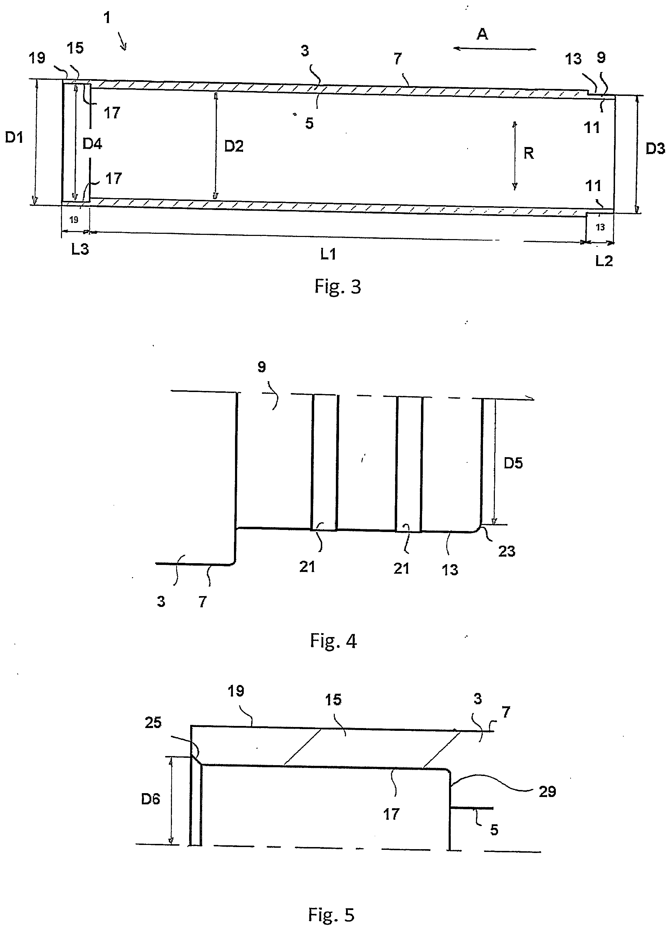

Fig. 3: a cross section of the tube element of Fig. 1 is shown;
Fig. 4 - 5: details of the tube element of Fig. 1 are shown;
Fig. 6: a tube element according to the present invention is shown;
Fig. 7: a tube element according to the present invention is shown.

Tube element 1 consists of expanded polypropylene and comprises an integrally formed central tube part 3, a first connection arrangement 9 and a second connection arrangement 15. The central tube part 3 comprises an inner wall 5 extending along the length L1 of said central tube part 3 thereby forming a tube section of an inner wall of a tube obtainable by coupling tube elements according to the present disclosure. The inner wall 5 defines a nominal inner diameter D2 of 150 mm. At a side of said central tube part 3 opposite of said inner wall 5, said central tube part has an outer wall 7 defining a nominal outer diameter D1 of 180 mm of said central part 3. Said outer wall 7 is provided with indicators 27 formed by markings that extend in a radial direction R along a circumference of said outer wall 7 perpendicular an axial direction A of said tube element 1. The marking 27 are spaced apart along the length of the said central tube part 3.

The first connection arrangement 9 is provided at a first end of said central tube part 3 and extends along a length L2. Along said length L2 of said first connection arrangement 9, said first connection arrangement 9 comprises a first connection arrangement inner wall 11. The first connection arrangement inner wall 11 extends along the length L2 of said first connection arrangement 9 and forms an integral surface with said inner wall 5 at said nominal inner diameter D2. At a side of said first connection arrangement 9 opposite of said first connection arrangement inner wall 11, said first connection arrangement 9 has a first connection arrangement outer wall 13 extending along said length L2. Said first connection arrangement outer wall 13 defines a first connection arrangement nominal outer wall diameter D3 of 165.1 mm. The difference between said nominal inner diameter D2 and said first connection arrangement nominal outer wall diameter D3 is 15.1 mm, or in other words a wall thickness of 7.55 mm. At said first connection arrangement outer wall 13 protrusions 21 are provided formed as rings extending in a radial direction R along a circumference of said first connection arrangement outer wall 13 perpendicular to said axial direction A. At an end, opposite of said central tube part 3, said first connection arrangement outer wall 13 is provided with a first coupling arrangement 23. The first coupling arrangement 23 is formed as a chamfer or rounded edge for realising a first coupling diameter D5 that is smaller than said first connection arrangement nominal outer wall diameter D3.

The second connection arrangement 15 extends along a length L3 and is provided at a second end of said central tube part 3. Said second end is opposite said first end of said central tube part 3. Along said length L3 of said second connection arrangement 15 said second connection arrangement 15 comprises a second connection arrangement inner wall 17. Said second connection arrangement inner wall 17 extends along said length L3 of said second connection arrangement 15 and defines a second connection arrangement nominal inner wall diameter D4 of 164.9 mm. Said second connection arrangement inner wall 17 at an end, opposite of said central tube part 3, of said second connection arrangement 15 is provided with a second coupling arrangement 25. The second coupling arrangement 25 is formed as a chamfer or rounded edge for realising a first coupling diameter D6 that is larger than said second connection arrangement nominal inner wall diameter D4. At a side of said second connection arrangement 15 opposite of said second connection arrangement nominal inner wall, said second connection arrangement 15 has a second connection arrangement outer wall 19 extending along said length L3. Said second connection arrangement outer wall 19 has a nominal outer diameter D1 of 180 mm. The second connection arrangement 15 has a nominal wall thickness of 7.55 mm.

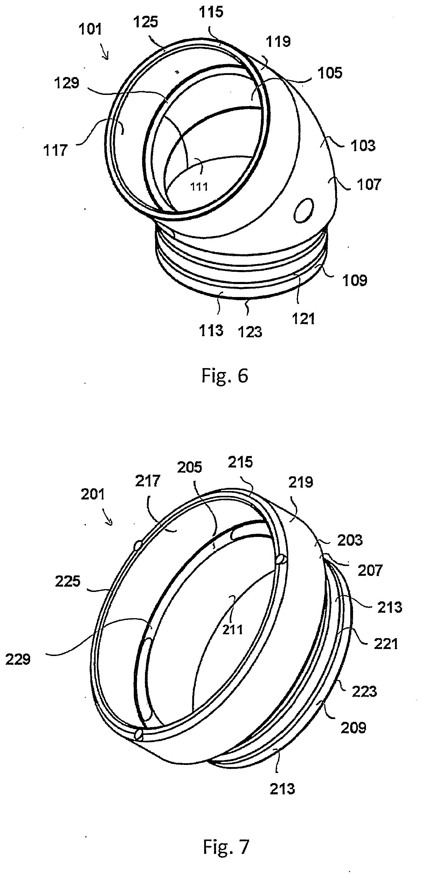

Tube element 101, shown in Fig. 6, differs mainly from tube element 1 in that the central part 103 is a bend central part that comprises a bend in an axial direction of said tube element 101. Moreover, tube element 101 is not provided with markings that extend in a radial direction along a circumference of the outer wall 107 of said central tube part 103. Elements of tube element 101 that are similar to elements of tube element 1 are provided with a reference number equal to the reference number of the element in tube element 1 raised by 100.

Tube element 201, shown in Fig. 7, comprises a central part 203 having a length L1 that is equal to 0.5 times the difference between said first connection arrangement outer wall diameter D3 and said second connection arrangement inner wall diameter D4. Moreover, tube element 201 is not provided with markings that extend in a radial direction along a circumference of the outer wall 207 of said central tube part 203. Elements of tube element 201 that are similar to elements of tube element 1 are provided with a reference number equal to the reference number of the element in tube element 1 raised by 200.

Coupling a first tube element 1, 101, 201 according to the present disclosure to a second tube element 1, 101, 201 according to the present disclosure is realised by coupling said first tube element 1, 101, 201 with the first coupling arrangement 9, 109, 209 thereof with the second coupling arrangement 15, 115, 215 of said second tube element 1, 101, 201. Upon coupling the first coupling arrangement 9, 109, 209 of the first tube element 1, 101, 201 is inserted into said second tube element 1, 101, 201 at the side of said second coupling arrangement 15, 115, 215 of said second tube element 1, 101, 201 until the end of said first tube element 1, 101, 201 at the side of said first coupling arrangement 9, 109, 209 abuts against an end wall 29, 129, 229 of said second tube element 1, 101, 201.

## Claims

1. Tube element (1, 101, 201) made of expanded polymer, preferably expanded polypropylene, for realizing a tube by coupling at least two of said tube elements (1, 101, 201), wherein said tube, along the length of said tube, has a constant nominal outer diameter (D1) and a constant nominal inner diameter (D2), said tube element (1, 101, 201) comprising:
a central tube part (3, 103, 203) comprising a central tube part inner wall (5, 105, 205) extending along the length (L1) of said central tube part at said nominal inner diameter (D2) and a central tube part outer wall (7, 107, 207);
a first connection arrangement (9, 109, 209) provided at a first end of said central tube part (3, 103, 203), wherein said first connection arrangement (9, 109, 209) comprises a first connection arrangement inner wall (11 , 111 , 211) extending along the length (L2) of said first connection arrangement (9, 109, 209) at said nominal inner diameter (D2) and a first connection arrangement outer wall (13, 113, 213) extending along the length (L2) of said first connection arrangement (9, 109, 209) at a first connection arrangement nominal outer wall diameter (D3);
a second connection arrangement (15, 115, 215) provided at a second end of said central tube part (3, 103, 203), wherein said second connection arrangement (15, 115, 215) comprises a second connection arrangement inner wall (17, 117, 217) extending along the length (L3) of said second connection arrangement (15, 115, 215) at a second connection arrangement nominal inner wall diameter (D4) and a second connection arrangement outer wall (19, 119, 219) extending along the length (L3) of said second connection arrangement (15, 115, 215) at said nominal outer diameter (D1 );
wherein said first connection arrangement outer wall diameter (D3) is larger than said second connection arrangement inner wall diameter (D4) for realizing a frictional coupling of said at least two tube elements (1, 101, 201);
wherein a difference between said nominal outer diameter (D1) and said nominal inner diameter (D2) is in the range of 20 to 40 mm; and
wherein one of said first connection arrangement (9, 109, 209) and said second connection arrangement (15, 115, 215) is provided with a protrusion (21, 121, 221) extending in a radial direction (R) from said first connection arrangement outer wall (13, 113, 213) or said second connection arrangement inner wall (17, 117, 217), wherein said protrusion (21, 121, 221) is arranged for cooperation with said first connection arrangement outer wall (13, 113, 213) or said second connection arrangement inner wall (17, 117, 217) of the other of said first connection arrangement (9, 109, 209) and said second connection arrangement (15, 115, 215) for realizing a further frictional coupling of said at least two tube elements (1, 101, 201).

2. Tube element (1, 101, 201) according to claim 1, wherein said difference between said nominal outer diameter (D1) and said nominal inner diameter (D2) is in the range of 25 to 35 mm, preferably in the range of 28 to 32 mm.

3. Tube element (1, 101, 201) according to claim 1 or 2, wherein said nominal inner diameter (D2) is in the range of 125 to 200 mm.

4. Tube element (1, 101, 201) according to any one of the preceding claims, wherein said first connection arrangement outer wall (13, 113, 213) at an end, opposite of said central tube part (3, 103, 203), of said first connection arrangement (9, 109, 209) is provided with a first coupling arrangement (23, 123, 223) having a first coupling diameter (DS) that is smaller than said first connection arrangement nominal outer wall diameter (D3) for centering said at least two tube elements (1, 101, 201) when coupling said at least two tube elements (1, 101, 201).

5. Tube element (1, 101, 201) according to claim 4, wherein said second connection arrangement inner wall (17, 117, 217) at an end, opposite of said central tube part (3, 103, 203), of said second connection arrangement (15, 115, 215) is provided with a second coupling arrangement (25, 125, 225) having a second coupling diameter (D6) that is larger than said second connection arrangement nominal inner wall diameter (D4) for centering said at least two tube elements (1, 101, 201) when coupling said at least two tube elements (1, 101, 201).

6. Tube element (1, 101) according to any one of the preceding claims, wherein said central tube part outer wall (7, 107) extends along the length (L1) of said central tube part (3, 103) at said nominal outer diameter (D1).

7. Tube element (1, 101, 201) according to any one of the preceding claims, wherein said length (L2) of said first connection arrangement (9, 109, 209) is larger than said length (L3) of said second connection arrangement (15, 115, 215).

8. Tube element (1, 101, 201) according to any one of the preceding claims, wherein said length (L1) of said central tube part (3, 103, 203) is equal to the difference between said first connection arrangement outer wall diameter (D3) and said second connection arrangement inner wall diameter (D4).

9. Tube element (1, 101, 201) according to any one of the preceding claims, wherein a difference between said nominal inner diameter (D2) and said first connection arrangement nominal outer wall diameter (D3) is in the range of 14 to 16 mm, preferably 15 mm.

10. Tube element (1, 101, 201) according to any one of the preceding claims, wherein said tube element has a bulk density of between 20 and 80 gram/liter, preferably between 30 and 40 gram/liter or between 40 and 60 gram/liter.

11. Tube element (1, 101, 201) according to any one of the preceding claims, wherein said expanded polymer, preferably said expanded polypropylene, of said first connection arrangement (9, 109, 209) and/or of said second connection arrangement (15, 115, 215) has an average particle diameter of between 2 mm and 4 mm with more than 90 % of the particles, preferably more than 95 % of the particles, being in that range

12. Tube element (1, 101, 201) according to claim 11, wherein a difference between said nominal inner diameter (D2) and said first connection arrangement nominal outer wall diameter (D3) is in a range between 4 - 20 times larger than said average particle diameter and/or wherein a difference between said nominal outer diameter (D1) and said second connection arrangement inner wall diameter (D4) is 4 - 20 times larger than said average particle diameter.

13. Tube element (1) according to any one of the preceding claims, wherein said central tube part (3) is provided with indicators (27) extending in a tangential direction along said central tube part outer wall (7), wherein said indicators (27) are equally spaced in an axial direction (A) of said tube element (1), and wherein said indicators (27) are arranged for indicating cutting positions along the length of said central tube part (3) for shortening said tube element (1) by cutting.

14. Tube obtained by coupling at least two tube elements (1, 101, 201) according to any one of the preceding claims.

## Patentansprüche

1. Rohrelement (1, 101, 201) aus aufgeschäumtem Polymer, vorzugsweise aufgeschäumtem Polypropylen, zur Herstellung eines Rohrs durch Koppeln mindestens zweier der Rohrelemente (1, 101, 201), wobei das Rohr entlang der Länge des Rohrs einen konstanten Nennaußendurchmesser (D1) und einen konstanten Nenninnendurchmesser (D2) aufweist, wobei das Rohrelement (1, 101, 201) Folgendes umfasst:
einen mittleren Rohrteil (3, 103, 203), der eine mittlere Rohrteilinnenwand (5, 105, 205), die sich entlang der Länge (L1) des mittleren Rohrteils mit Nenninnendurchmesser (D2) erstreckt, und eine mittlere Rohrteilaußenwand (7, 107, 207) umfasst;
eine erste Verbindungsanordnung (9, 109, 209), die an einem ersten Ende des mittleren Rohrteils (3, 103, 203) vorgesehen ist, wobei die erste Verbindungsanordnung (9, 109, 209) eine erste Verbindungsanordnungsinnenwand (11, 111, 211), die sich entlang der Länge (L2) der ersten Verbindungsanordnung (9, 109, 209) mit Nenninnendurchmesser (D2) erstreckt, und eine erste Verbindungsanordnungsaußenwand (13, 113, 213), die sich entlang der Länge (L2) der ersten Verbindungsanordnung (9, 109, 209) mit einem ersten Verbindungsanordnungsnennaußenwanddurchmesser (D3) erstreckt, umfasst;
eine zweite Verbindungsanordnung (15, 115, 215), die an einem zweiten Ende des mittleren Rohrteils (3, 103, 203) vorgesehen ist, wobei die zweite Verbindungsanordnung (15, 115, 215) eine zweite Verbindungsanordnungsinnenwand (17, 117, 217), die sich entlang der Länge (L3) der zweiten Verbindungsanordnung (15, 115, 215) mit einem zweiten Verbindungsanordnungsnenninnenwanddurchmesser (D4) erstreckt, und eine zweite Verbindungsanordnungsaußenwand (19, 119, 219), die sich entlang der Länge (L3) der zweiten Verbindungsanordnung (15, 115, 215) mit dem Nennaußendurchmesser (D1) erstreckt, umfasst;
wobei der erste Verbindungsanordnungsaußenwanddurchmesser (D3) größer ist als der zweite Verbindungsanordnungsinnenwanddurchmesser (D4), um eine reibschlüssige Kupplung der mindestens zwei Rohrelemente (1, 101, 201) herzustellen;
wobei die Differenz zwischen dem Nennaußendurchmesser (D1) und dem Nenninnendurchmesser (D2) im Bereich von 20 bis 40 mm liegt und
wobei die erste Verbindungsanordnung (9, 109, 209) oder die zweite Verbindungsanordnung (15, 115, 215) mit einem Vorsprung (21, 121, 221) versehen ist, der sich von der ersten Verbindungsanordnungsaußenwand (13, 113, 213) oder der zweiten Verbindungsanordnungsinnenwand (17, 117, 217) in eine Radialrichtung (R) erstreckt, wobei der Vorsprung (21, 121, 221) zum Zusammenwirken mit der ersten Verbindungsanordnungsaußenwand (13, 113, 213) oder der zweiten Verbindungsanordnungsinnenwand (17, 117, 217) der anderen der ersten Verbindungsanordnung (9, 109, 209) und der zweiten Verbindungsanordnung (15, 115, 215) angeordnet ist, um eine weitere reibschlüssige Kupplung der mindestens zwei Rohrelemente (1, 101, 201) herzustellen.

2. Rohrelement (1, 101, 201) nach Anspruch 1, wobei die Differenz zwischen dem Nennaußendurchmesser (D1) und dem Nenninnendurchmesser (D2) im Bereich von 25 bis 35 mm, vorzugsweise im Bereich von 28 bis 32 mm, liegt.

3. Rohrelement (1, 101, 201) nach Anspruch 1 oder 2, wobei der Nenninnendurchmesser (D2) im Bereich von 125 bis 200 mm liegt.

4. Rohrelement (1, 101, 201) nach einem der vorstehenden Ansprüche, wobei die erste Verbindungsanordnungsaußenwand (13, 113, 213) an einem Ende, das dem mittleren Rohrteil (3, 103, 203) entgegengesetzt ist, der ersten Verbindungsanordnung (9, 109, 209) mit einer ersten Kupplungsanordnung (23, 123, 223) versehen ist, die einen ersten Kupplungsdurchmesser (DS) aufweist, der kleiner ist als der erste Verbindungsanordnungsnennaußenwanddurchmesser (D3) zum Zentrieren der mindestens zwei Rohrelemente (1, 101, 201) beim Koppeln der mindestens zwei Rohrelemente (1, 101, 201) .

5. Rohrelement (1, 101, 201) nach Anspruch 4, wobei die zweite Verbindungsanordnungsinnenwand (17, 117, 217) an einem Ende, das dem mittleren Rohrteil (3, 103, 203) entgegengesetzt ist, der zweiten Verbindungsanordnung (15, 115, 215) mit einer zweiten Kupplungsanordnung (25, 125, 225) versehen ist, die einen zweiten Kupplungsdurchmesser (D6) aufweist, der größer ist als der zweite Verbindungsanordnungsnenninnenwanddurchmesser (D4) zum Zentrieren der mindestens zwei Rohrelemente (1, 101, 201) beim Koppeln der mindestens zwei Rohrelemente (1, 101, 201).

6. Rohrelement (1, 101) nach einem der vorstehenden Ansprüche, wobei sich die mittlere Rohrteilaußenwand (7, 107) entlang der Länge (L1) des mittleren Rohrteils (3, 103) mit dem Nennaußendurchmesser (D1) erstreckt.

7. Rohrelement (1, 101, 201) nach einem der vorstehenden Ansprüche, wobei die Länge (L2) der ersten Verbindungsanordnung (9, 109, 209) größer ist als die Länge (L3) der zweiten Verbindungsanordnung (15, 115, 215) .

8. Rohrelement (1, 101, 201) nach einem der vorstehenden Ansprüche, wobei die Länge (L1) des mittleren Rohrteils (3, 103, 203) gleich der Differenz zwischen dem ersten Verbindungsanordnungsaußenwanddurchmesser (D3) und dem zweiten Verbindungsanordnungsinnenwanddurchmesser (D4) ist.

9. Rohrelement (1, 101, 201) nach einem der vorstehenden Ansprüche, wobei die Differenz zwischen dem Nenninnendurchmesser (D2) und dem ersten Verbindungsanordnungsnennaußenwanddurchmesser (D3) im Bereich von 14 bis 16 mm, vorzugsweise bei 15 mm, liegt.

10. Rohrelement (1, 101, 201) nach einem der vorstehenden Ansprüche, wobei das Rohrelement eine Rohdichte von zwischen 20 und 80 Gramm/Liter, vorzugsweise zwischen 30 und 40 Gramm/Liter oder zwischen 40 und 60 Gramm/Liter, aufweist.

11. Rohrelement (1, 101, 201) nach einem der vorstehenden Ansprüche, wobei das aufgeschäumte Polymer, vorzugsweise das aufgeschäumte Polypropylen, der ersten Verbindungsanordnung (9, 109, 209) und/oder der zweiten Verbindungsanordnung (15, 115, 215) einen durchschnittlichen Partikeldurchmesser von zwischen 2 mm und 4 mm aufweist, wobei mehr als 90 % der Partikel, vorzugsweise mehr als 95 % der Partikel, in diesem Bereich liegen.

12. Rohrelement (1, 101, 201) nach Anspruch 11, wobei die Differenz zwischen dem Nenninnendurchmesser (D2) und dem ersten Verbindungsanordnungsnennaußenwanddurchmesser (D3) in einem Bereich liegt, der 4-20 Mal größer ist als der durchschnittliche Partikeldurchmesser, und/oder wobei die Differenz zwischen dem Nennaußendurchmesser (D1) und dem zweiten Verbindungsanordnungsnenninnenwanddurchmesser (D4) 4-20 Mal größer ist als der durchschnittliche Partikeldurchmesser.

13. Rohrelement (1) nach einem der vorstehenden Ansprüche, wobei der mittlere Rohrteil (3) mit Markierungen (27) versehen ist, die sich in eine tangentiale Richtung entlang der mittleren Rohrteilaußenwand (7) erstrecken, wobei die Markierungen (27) in eine Axialrichtung (A) des Rohrelements (1) gleichmäßig beabstandet sind und wobei die Markierungen (27) dazu angeordnet sind, die Schneidpositionen entlang der Länge des mittleren Rohrteils (3) zum Kürzen des Rohrelements (1) durch Schneiden zu markieren.

14. Rohr, das durch Koppeln mindestens zweier Rohrelemente (1, 101, 201) nach einem der vorstehenden Ansprüche hergestellt ist.

## Revendications

1. Élément de tube (1, 101, 201) fait de polymère expansé, de préférence de polypropylène expansé, pour former un tube par accouplement d'au moins deux desdits éléments de tube (1, 101, 201), ledit tube, le long de la longueur dudit tube, présentant un diamètre extérieur nominal (D1) constant et un diamètre intérieur nominal (D2) constant, ledit élément de tube (1, 101, 201) comprenant :
une partie centrale de tube (3, 103, 203) comprenant une paroi intérieure (5, 105, 205) de partie centrale de tube s'étendant le long de la longueur (L1) de ladite partie centrale de tube avec ledit diamètre intérieur nominal (D2) et une paroi extérieure (7, 107, 207) de partie centrale de tube ;
un premier système de raccordement (9, 109, 209) situé à une première extrémité de ladite partie centrale de tube (3, 103, 203), ledit premier système de raccordement (9, 109, 209) comprenant une paroi intérieure (11, 111, 211) de premier système de raccordement s'étendant le long de la longueur (L2) dudit premier système de raccordement (9, 109, 209) avec ledit diamètre intérieur nominal (D2) et une paroi extérieure (13, 113, 213) de premier système de raccordement s'étendant le long de la longueur (L2) dudit premier système de raccordement (9, 109, 209) avec un diamètre de paroi extérieure nominal (D3) de premier système de raccordement ;
un second système de raccordement (15, 115, 215) situé à une seconde extrémité de ladite partie centrale de tube (3, 103, 203), ledit second système de raccordement (15, 115, 215) comprenant une paroi intérieure (17, 117, 217) de second système de raccordement s'étendant le long de la longueur (L3) dudit second système de raccordement (15, 115, 215) avec un diamètre de paroi intérieure nominal (D4) de second système de raccordement et une paroi extérieure (19, 119, 219) de second système de raccordement s'étendant le long de la longueur (L3) dudit second système de raccordement (15, 115, 215) avec ledit diamètre extérieur nominal (D1) ;
dans lequel ledit diamètre de paroi extérieure (D3) de premier système de raccordement est supérieur audit diamètre de paroi intérieure (D4) de second système de raccordement afin de former un accouplement à ajustement avec serrage desdits au moins deux éléments de tube (1, 101, 201) ;
dans lequel une différence entre ledit diamètre extérieur nominal (D1) et ledit diamètre intérieur nominal (D2) est comprise dans la plage de 20 à 40 mm ; et
dans lequel l'un dudit premier système de raccordement (9, 109, 209) et dudit second système de raccordement (15, 115, 215) est pourvu d'une saillie (21, 121, 221) s'étendant dans une direction radiale (R) à partir de ladite paroi extérieure (13, 113, 213) de premier système de raccordement ou de ladite paroi intérieure (17, 117, 217) de second système de raccordement, ladite saillie (21, 121, 221) étant conçue pour coopérer avec ladite paroi extérieure (13, 113, 213) de premier système de raccordement ou ladite paroi intérieure (17, 117, 217) de second système de raccordement de l'autre dudit premier système de raccordement (9, 109, 209) et dudit second système de raccordement (15, 115, 215) afin de former un accouplement à ajustement avec serrage supplémentaire desdits au moins deux éléments de tube (1, 101, 201).

2. Élément de tube (1, 101, 201) selon la revendication 1, dans lequel ladite différence entre ledit diamètre extérieur nominal (D1) et ledit diamètre intérieur nominal (D2) est comprise dans la plage de 25 à 35 mm, de préférence dans la plage de 28 à 32 mm.

3. Élément de tube (1, 101, 201) selon la revendication 1 ou 2, dans lequel ledit diamètre intérieur nominal (D2) est compris dans la plage de 125 à 200 mm.

4. Élément de tube (1, 101, 201) selon l'une quelconque des revendications précédentes, dans lequel ladite paroi extérieure (13, 113, 213) de premier système de raccordement, au niveau d'une extrémité, à l'opposé de ladite partie centrale de tube (3, 103, 203), dudit premier système de raccordement (9, 109, 209) est pourvue d'un premier système d'accouplement (23, 123, 223) présentant un premier diamètre d'accouplement (D5) qui est inférieur audit diamètre de paroi extérieure nominal (D3) de premier système de raccordement pour centrer lesdits au moins deux éléments de tube (1, 101, 201) lors de l'accouplement desdits au moins deux éléments de tube (1, 101, 201).

5. Élément de tube (1, 101, 201) selon la revendication 4, dans lequel ladite paroi intérieure (17, 117, 217) de second système de raccordement, au niveau d'une extrémité, à l'opposé de ladite partie centrale de tube (3, 103, 203), dudit second système de raccordement (15, 115, 215) est pourvue d'un second système d'accouplement (25, 125, 225) présentant un second diamètre d'accouplement (D6) qui est supérieur audit diamètre de paroi intérieure nominal (D4) de second système de raccordement pour centrer lesdits au moins deux éléments de tube (1, 101, 201) lors de l'accouplement desdits au moins deux éléments de tube (1, 101, 201).

6. Élément de tube (1, 101) selon l'une quelconque des revendications précédentes, dans lequel ladite paroi extérieure (7, 107) de partie centrale de tube s'étend le long de la longueur (L1) de ladite partie centrale de tube (3, 103) avec ledit diamètre extérieur nominal (D1).

7. Élément de tube (1, 101, 201) selon l'une quelconque des revendications précédentes, dans lequel ladite longueur (L2) dudit premier système de raccordement (9, 109, 209) est supérieure à ladite longueur (L3) dudit second système de raccordement (15, 115, 215).

8. Élément de tube (1, 101, 201) selon l'une quelconque des revendications précédentes, dans lequel ladite longueur (L1) de ladite partie centrale de tube (3, 103, 203) est égale à la différence entre ledit diamètre de paroi extérieure (D3) de premier système de raccordement et ledit diamètre de paroi intérieure (D4) de second système de raccordement.

9. Élément de tube (1, 101, 201) selon l'une quelconque des revendications précédentes, dans lequel une différence entre ledit diamètre intérieur nominal (D2) et ledit diamètre de paroi extérieure nominal (D3) de premier système de raccordement est comprise dans la plage de 14 à 16 mm, de préférence est de 15 mm.

10. Élément de tube (1, 101, 201) selon l'une quelconque des revendications précédentes, ledit élément de tube présentant une masse volumique comprise entre 20 et 80 grammes/litre, de préférence entre 30 et 40 grammes/litre ou entre 40 et 60 grammes/litre.

11. Élément de tube (1, 101, 201) selon l'une quelconque des revendications précédentes, dans lequel ledit polymère expansé, de préférence ledit polypropylène expansé, dudit premier système de raccordement (9, 109, 209) et/ou dudit second système de raccordement (15, 115, 215) présente un diamètre moyen des particules compris entre 2 mm et 4 mm, plus de 90 % des particules, de préférence plus de 95 % des particules, étant dans cette plage.

12. Élément de tube (1, 101, 201) selon la revendication 11, dans lequel une différence entre ledit diamètre intérieur nominal (D2) et ledit diamètre de paroi extérieure nominal (D3) de premier système de raccordement est comprise dans une plage allant de 4 à 20 fois ledit diamètre moyen des particules et/ou dans lequel une différence entre ledit diamètre extérieur nominal (D1) et ledit diamètre de paroi intérieure (D4) de second système de raccordement est de 4 à 20 fois ledit diamètre moyen des particules.

13. Élément de tube (1) selon l'une quelconque des revendications précédentes, dans lequel ladite partie centrale de tube (3) est pourvue d'indicateurs (27) s'étendant dans une direction tangentielle le long de ladite paroi extérieure (7) de partie centrale de tube, dans lequel lesdits indicateurs (27) sont disposés de manière équidistante dans une direction axiale (A) dudit élément de tube (1), et dans lequel lesdits indicateurs (27) sont conçus pour indiquer des emplacements de coupe le long de la longueur de ladite partie centrale de tube (3) pour raccourcir ledit élément de tube (1) en le coupant.

14. Tube obtenu en accouplant au moins deux éléments de tube (1, 101, 201) selon l'une quelconque des revendications précédentes.
